# EUROPÄISCHE PATENTSCHRIFT

(11) **EP 2 067 399 B1**
(45) Veröffentlichungstag und Bekanntmachung des Hinweises auf die Patenterteilung: **13.04.2016**
(21) Anmeldenummer: 08168934.1
(22) Anmeldetag: 12.11.2008
(51) Int. Cl.: A01D 89/00, A01F 15/10

(54) **Anordnung zur Verstellung der Position einer Aufnehmertrommel und eines Niederhalters einer landwirtschaftlichen Erntemaschine**
Arrangement to adjust the position of a pick-up drum and a pressing element in an agricultural harvesting machine
Arrangement de réglage de la position d'un tambour ramasseur et d'un élément presseur d'une moissonneuse agricole

(30) Priorität: 04.12.2007 DE 102007058313
(43) Veröffentlichungstag der Anmeldung: 10.06.2009
(73) Patentinhaber: Deere & Company, Moline, IL 61265 (US)
(72) Erfinder: Humbert, Clément, 25320, Boussieres (FR)
(74) Vertreter: Holst, Sönke

(56) Entgegenhaltungen:
- EP-A- 1 733 609
- EP-A1- 1 046 333
- DE-A1- 4 115 056
- DE-A1- 10 057 135
- DE-A1- 19 918 552
- GB-A- 2 245 471
- US-A- 4 516 389

## Beschreibung

Die Erfindung betrifft eine Anordnung zur Verstellung der Position einer Aufnehmertrommel und eines Niederhalters einer landwirtschaftlichen Erntemaschine, mit einem zum Bewegen der Aufnehmertrommel gegenüber der Erntemaschine zwischen einer Betriebsposition und einer Außerbetriebsposition eingerichteten ersten Aktor, einem zur Höhenverstellung des Niederhalters gegenüber der Aufnehmertrommel eingerichteten zweiten Aktor und einer mit den Aktoren verbundenen Steuereinrichtung.

### Stand der Technik

Gutaufnehmer werden in der Landwirtschaft verwendet, um auf einem Feld liegendes Gut, das zuvor getrocknet worden sein kann und in einem Schwad abgelegt wurde, aufzunehmen und einer Erntemaschine zuzuführen, in der es zu einem Ballen gepresst (Ballenpresse), abgelegt (Ladewagen), gehäckselt (Feldhäcksler) oder ausgedroschen (Mähdrescher) wird. Derartige Gutaufnehmer umfassen üblicherweise Aufnahmetrommeln mit an (sich quer zur Vorwärtsrichtung erstreckenden) Zinkenträgern angebrachten Zinken. Die Zinkenträger werden in Bewegung versetzt, indem sie selbst oder eine mit ihnen in Antriebsverbindung stehende, zentrische Welle in Rotation versetzt werden. Die Zinkenträger können durch Kurven- oder Nockenbahnen gesteuert werden oder sie sind ungesteuert. Die Zinken erstrecken sich durch Zwischenräume, die zwischen am Rahmen des Gutaufnehmers angebrachten Abstreifern verbleiben, nach außen und bewegen sich entlang dieser Zwischenräume.

Oberhalb der Aufnahmetrommel ist üblicherweise ein so genannter Niederhalter angeordnet, der eine Bewegung des von der Aufnahmetrommel geförderten Ernteguts nach vorn und oben begrenzt. Derartige Niederhalter wurden im Stand der Technik insbesondere durch flache Bleche (DE 39 19 889 A) oder quer zur Vorwärtsrichtung angeordnete, frei rotierende oder angetriebene Anordnungen mit zwei oder mehr Walzen (DE 39 22 695 A), oder Walzen mit stromab folgenden, schwenkbar angelenkten Blechen oder Federzinken (DE 101 20 124 A) realisiert.

Es hat sich als vorteilhaft erwiesen, den Niederhalter mittels eines aktiven Antriebs aushebbar zu gestalten, um ihn nach einem Erntegutstau anheben zu können und das Herausfördern des Ernteguts beim Reversieren zu erleichtern. Dazu ist zwischen einem die Aufhahmetrommel haltemden Rahmen und dem Niederhalter ein Hydraulikzylinder vorgesehen. (EP 0 403 899 A, DE 19918 552 A).

Die Aufnehmertrommel selbst ist um eine horizontal und quer zur Vorwärtsrichtung verlaufende Achse schwenkbar mit dem Fahrgestell der Erntemaschine gekoppelt und wird mittels Tasträdem oder durch aktive, mittels eines Bodenabstandssensors angesteuerter Aktoren (s. DE 4115 056 A, DE 100 57 135 A oder DE 299 22 193 U) in konstanter Höhe über den Erdboden geführt. Zum Straßentransport wird die Aufnehmertrommel mittels eines Hydraulikzylinders um die erwähnte Achse nach oben verschwenkt. Falls der Niederhalter sich dann in einer angehobenen Position befindet, besteht die Gefahr, dass er mit Bauelementen der Erntemaschine kollidiert, beispielsweise der Unterseite des Rahmens der Erntemaschine oder einer Deichsel, mittels der sie an ein Zugfahrzeug gekoppelt ist. Der Bediener der Erntemaschine muss demnach darauf achten, dass er den Niederhalter absenkt, bevor er die Aufnehmertrommel anhebt, um eine Beschädigung des Niederhalters oder der Erntemaschine zu vermeiden. Diese Aufgabe ist insbesondere für ungeübte oder ermüdete Bediener recht fehlerträchtig.

Die GB 2 245 471 A beschreibt ein Schneidwerk für einen Mähdrescher mit einer Querförderschnecke und einer Haspel. Die Querförderschnecke ist in der Vorwärtsrichtung gegenüber dem Rahmen des Schneidwerks durch Hydraulikzylinder verstellbar. Die Position der Haspel ist in Längsrichtung durch einen Zylinder und in vertikaler Richtung durch einen Zylinder verstellbar Die Bewegung der Haspel kann mit der Querförderschnecke gekoppelt werden. Dadurch soll ein Zusammenstoß zwischen der Haspel und der Querförderschnecke vermieden werden.

In der EP 1 733 609 A wird eine Ballenpresse mit einem Aufnehmer beschrieben, dem ein quer angeordneter Niederhalter zugeordnet ist. Wenn der Aufnehmer zum Straßentransport durch einen hydraulischen Aktor in eine Außerbetriebsstellung angehoben wird, wird der Niederhalter durch eine Mechanik gegenüber dem Aufnehmer angehoben.

### Aufgabe der Erfindung

Die der Erfindung zu Grunde liegende Aufgabe wird darin gesehen, eine Anordnung zur Verstellung der Position einer Aufnehmertrommel und eines Niederhalters einer landwirtschaftlichen Erntemaschine bereitzustellen, bei der unerwünschte Kollisionen des Niederhalters mit Teilen der Erntemaschine vermieden werden.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Anordnung zur Verstellung der Position einer Aufnehmertrommel und eines Niederhalters einer landwirtschaftlichen Erntemaschine umfasst zwei Aktoren und eine damit verbundene Steuereinrichtung. Ein erster Aktor dient zum Bewegen der Aufnehmertrommel gegenüber der Erntemaschine zwischen einer abgesenkten Betriebsposition und einer angehobenen Außerbetriebsposition. Ein zweiter Aktor ist zur Höhenverstellung des Niederhalters gegenüber der Aufnehmertrommel vorgesehen. Die Steuereinrichtung steuert selbsttätig den zweiten Aktor im Sinne einer Abwärtsbewegung des Niederhalters an, wenn sie den ersten Aktor veranlasst, die Aufnehmertrommel in die Außerbetriebsposition zu verbringen.

Auf diese Weise wird automatisch verhindert, dass der Niederhalter gegen Bauteile der Erntemaschine stößt, wenn die Aufnehmertrommel in die Außerbetriebsposition verbracht wird. Die Erfindung ist auch dann vorteilhaft, wenn sich keine Bauteile der Erntemaschine oberhalb des Niederhalters befinden, da die Begrenzung der vom Niederhalter erreichbaren Höhe das Risiko vermindert, dass er gegen andere Hindernisse, z. B. Äste von Bäumen, stößt oder umstehende Personen verletzt.

Es bietet sich an, dass die Steuereinrichtung den zweiten Aktor zeitlich vor oder gleichzeitig mit dem ersten Aktor, der die Aufnehmertrommel in die Außerbetriebsposition verbringt, zur Abwärtsbewegung des Niederhalters ansteuert.

Bei einer möglichen Ausführungsform ist der erste Aktor ein Elektromotor oder ein Hydraulikzylinder, wie auch der zweite Aktor als Elektromotor oder Hydraulikzylinder ausgeführt sein kann. Die Steuereinrichtung kann mit einer durch den Bediener der Erntemaschine verbundenen Eingabeeinrichtung verbunden werden, die eine gemeinsame oder getrennte Ansteuerung der beiden Aktoren ermöglicht, wobei die erfindungsgemäße Kopplung der Abwärtsbewegung des Niederhalters mit der Anhebung der Aufnehmertrommel in die Außerbetriebsposition vorgesehen ist.

### Ausführungsbeispiel

Anhand der Abbildungen wird ein Ausführungsbeispiel der Erfindung erläutert. Es zeigt:
- Fig. 1: eine schematische Darstellung einer mit einer erfindungsgemäßen Anordnung ausgestatteten Erntemaschine und eines Traktors,
- Fig. 2: ein Hydraulikdiagramm der Steuereinrichtung,
- Fig. 3: das Diagramm aus Figur 2 beim Anheben der Aufnehmertrommel,
- Fig. 4: das Diagramm aus Figur 2 beim Anheben der Aufnehmertrommel und beim Absenken des Niederhalters,
- Fig. 5: das Diagramm aus Figur 2 beim Absenken der Aufnehmertrommel und beim Anheben des Niederhalters,
- Fig. 6: das Diagramm aus Figur 2 beim Absenken der Aufnehmertrommel und beim Absenken des Niederhalters,
- Fig. 7: das Diagramm aus Figur 2 in einer Schwimmstellung.

Eine gezogene Erntemaschine 10 in Form einer Ballenpresse ist mit einem Fahrgestell 12, einem Ballenpressraum 14, Rädern 16, einer Deichsel 18 und einer Aufnehmertrommel 20 versehen und wird von einem Zugfahrzeug 22 gezogen, an dessen rückwärtiger Anhängekupplung 24 die Deichsel 18 befestigt ist. Die Erntemaschine 10 ist in dem dargestellten Ausführungsbeispiel als eine Rundballenpresse mit einem Ballenpressraum 14 fester Größe ausgebildet. Stattdessen könnte auch eine andere Art einer Presse, z. B. eine Rundballenpresse mit größenvariablem Ballenpressraum, eine Quaderballenpresse, eine Großballenpresse oder dergleichen gezogenes Gerät mit einem Aufnehmer 20 gewählt werden.

Das Fahrgestell 12 ist als Schweißzusammenbau gebildet und trägt Seitenwände 26, zwischen denen sich rollenartige Presselemente 28 erstrecken. Der Ballenpressraum 14 wird seitlich von den Seitenwänden 26 und umfangsseitig von den Presselementen 28 umschlossen. Die Presselemente 28 lassen an einer Stelle vom unten einen Einlass 30, durch den Erntegut von der Aufnehmertrommel 20 in den Ballenpressraum 14 eingespeist werden kann. Die Räder 16 stützen das Fahrgestell 12 bzw. die gesamte Erntemaschine 10 auf dem Boden ab. Die Deichsel 18 stellt eine Verbindung zwischen dem Fahrgestell 12 und dem Zugfahrzeug 22 her und erstreckt sich im Wesentlichen horizontal oberhalb der Aufnehmertrommel 20.

Die Aufnehmertrommel 20 ist in der Art einer so genannten Pick-Up ausgebildet, d. h. mit mehreren umlaufenden Reihen von federnden Zinken 32 versehen, die über den Boden streifen und dabei auf ihm liegendes Erntegut anheben und nach hinten zu dem Einlass 30 fördern. Die Zinken 32 können starr an einem mittigen Rotor der Aufnehmertrommel 20 befestigt sein oder ihr Winkel gegenüber der Aufnehmertrommel 20 wird durch Nockenbahnen oder andere geeignete Mittel gesteuert. In der gezeigten - aber nicht erforderlichen - Weise können zwischen der Aufnehmertrommel 20 und dem Einlass 30 Förderrotoren 34 vorgesehen sein.

Die Aufnehmertrommel 20 ist in bekannter Weise in einem Gestell 48 angebracht, das um eine horizontal und quer zur Vorwärtsrichtung verlaufende Achse 36 schwenkbar an dem Fahrgestell 12 befestigt ist. Das Gestell 48 der Aufnehmertrommel 20 stützt sich durch Tasträder 38 auf dem Erdboden ab, die an beiden Seiten der Aufnehmertrommel vorgesehen sind und die Aufnehmertrommel 20 in einer bodenkopierenden Weise in einer konstanten Höhe über den Erdboden führen. Oberhalb der Aufnehmertrommel 20 ist ein Niederhalter 40 angebracht, der mit einer vorderen, sich über die Breite der Aufnehmertrommel 20 erstreckenden, frei um ihre sich horizontal und quer zur Vorwärtsrichtung erstreckende Längsachse drehbaren Walze 42 ausgestattet ist und zur Begrenzung des von der Aufnehmertrommel 20 aufgenommenen Erntegutflusses nach vorn und oben dient. Der Niederhalter 40 kann anstelle oder zusätzlich zur Walze 42 auch starre oder flexible oder schwenkbare Leitbleche (nicht gezeigt) aufweisen. Der Niederhalter 40 ist an seinem rückwärtigen Ende um eine horizontal und quer zur Vorwärtsrichtung verlaufende Achse 44 schwenkbar an einem Halter 46 angelenkt, der wiederum mit dem Gestell 48 verbunden ist.

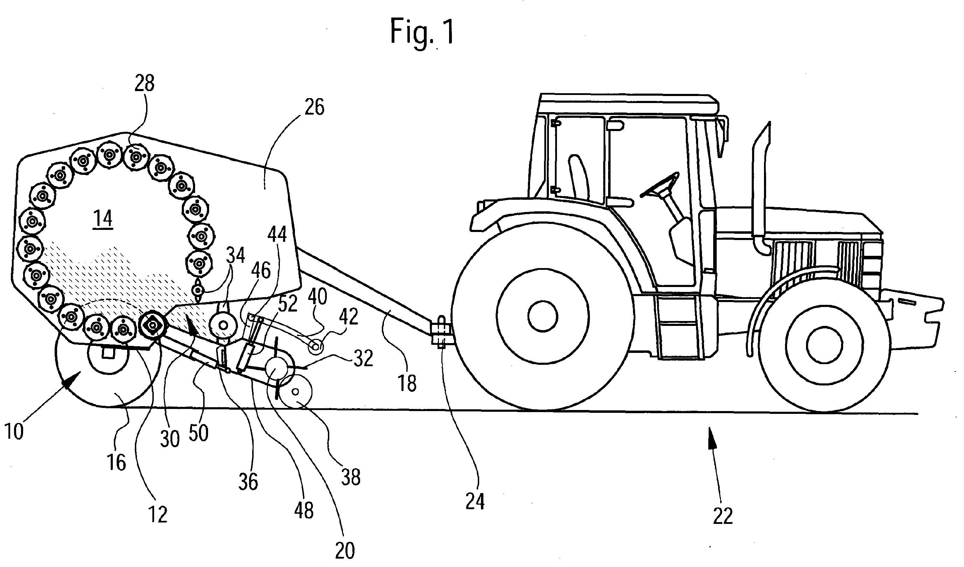

Ein erster Aktor 50 in Form eines einfach wirkenden Hydraulikzylinders ist zwischen dem Fahrgestell 12 und dem Gestell 48 der Aufnehmertrommel 20 angeordnet. Wird seine Kolbenkammer beaufschlagt, wird das Gestell 48 mit der Aufnehmertrommel 20 aus der in der Figur 1 dargestellten Betriebsposition um die Achse 36 nach oben in eine Außerbetriebsposition (nicht dargestellt) verschwenkt, um die Erntemaschine 10 auf einer Straße bewegen zu können. Ein zweiter Aktor 52 in Form eines doppelt wirkenden Hydraulikzylinders ist zwischen dem Gestell 48 und dem Niederhalter 40 angeordnet. Wird die Kolbenkammer des zweiten Aktors 52 beaufschlagt, wird der Niederhalter 40 gegenüber der Aufnehmertrommel 20 anhoben, und der Niederhalter 40 wird gegenüber der Aufnehmertrommel 20 abgesenkt, wenn die Kolbenstangenkammer des zweiten Aktors 52 beaufschlagt wird. Beim Erntebetrieb befindet sich der zweite Aktor 52 in seiner tiefstmöglichen Stellung. Der Niederhalter 40 folgt dann der durch die Tasträder 38 bewirkten Bewegung der Aufnehmertrommel 20 um die Achse 36 und sein Abstand gegenüber der Aufnehmertrommel 20 bleibt konstant. Im Falle einer Verstopfung der Aufnehmertrommel 20 oder des Einlasses 30 kann der Niederhalter 40 mittels des zweiten Aktors 52 angehoben werden, um das Reversieren der Aufnehmertrommel 20 und/oder der Rotoren 34 zwecks einer Beseitigung der Verstopfung zu erleichtern. Bei einer nicht dargestellten, anderen Ausführungsform ist der Niederhalter 40 durch den zweiten Aktor 52 in vertikaler Richtung verschiebbar angebracht.

Anders als in der Figur 1 erkennbar, ist an beiden Seiten des Niederhalters 40 je ein zweiter Aktor 52 vorhanden, wie auch zwei erste Aktoren 50 an beiden Seiten des Gestells 48 vorgesehen sind. An dieser Stelle sei angemerkt, dass die Tasträder 38 entfallen können, wenn der erste Aktor 50 (oder ein anderer, geeigneter Aktor) mittels eines geeigneten Sensors eine selbsttätige Höhensteuerung der Aufnehmertrommel 20 durchführt, wie in der DE 100 57 135 A beschrieben, deren Offenbarung durch Verweis mit in die vorliegenden Unterlagen aufgenommen wird.

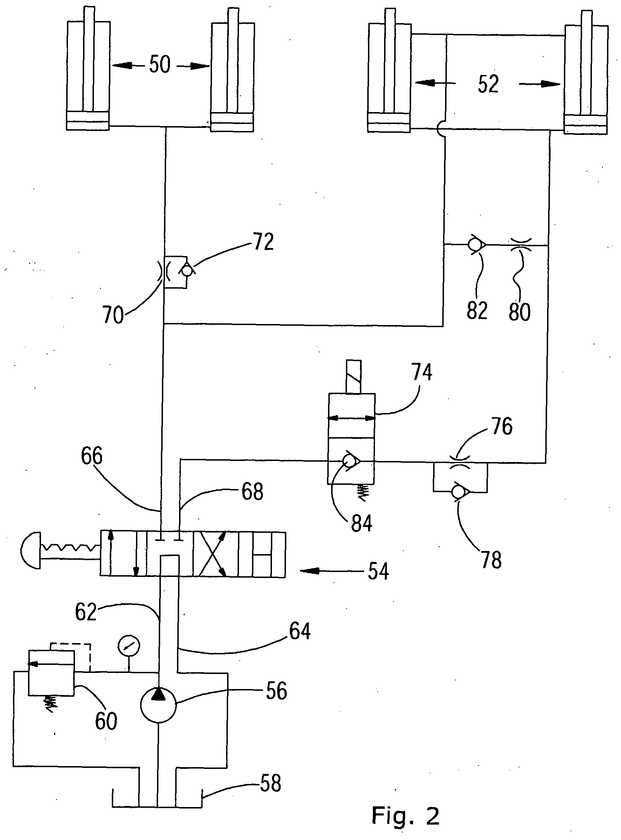

Die Figur 2 zeigt ein Hydraulikschema der Steuereinrichtung zur Ansteuerung der Aktoren 50, 52. Sie umfasst ein Auswahlsteuerventil 54 mit zwei Wegen und vier Positionen, das sich an Bord des Zugfahrzeugs 22 befindet und manuell oder Fremdkraft gesteuert durch den Bediener des Zugfahrzeugs 22 von seinem Arbeitsplatz aus bewegbar ist. Ein erster Eingang 62 des Auswahlsteuerventils 54 ist mit einer Quelle 56 unter Druck stehenden Hydraulikfluids verbunden, die als Hydraulikpumpe ausgeführt und ihrerseits mit einem Vorratsbehälter 58 verbunden ist. Ein Druckbegrenzungsventil 60 begrenzt den Druck der Quelle 56 auf einen gewünschten Wert. Ein zweiter Eingang 64 des Auswahlsteuerventils 54 ist mit dem Vorratsbehälter 58 verbunden. Ein erster Ausgang 66 des Auswahlsteuerventils 54 ist direkt mit der Kolbenstangenkammer der zweiten Aktoren 52 und über eine Drossel 70 und ein dazu parallel geschaltetes, sich in Richtung auf den Ausgang 66 öffnendes Rückschlagventil 72 mit der Kolbenkammer der ersten Aktoren 50 verbunden. Ein zweiter Ausgang 68 des Auswahlsteuerventils 54 ist über ein Auswahlventil 74 mit einem Weg und zwei Stellungen und eine dazu in Reihe geschaltete Drossel 76 und ein parallel zur Drossel 76 geschaltetes, sich in Richtung auf den Ausgang 68 öffnendes Rückschlagventil 78 mit der Kolbenkammer des zweiten Aktors 52 verbunden. Die Kolbenkammer und die Kolbenstangenkammer des zweiten Aktors 52 sind untereinander durch eine Drossel 80 und ein damit in Reihe geschaltetes Rückschlagventil 82 verbunden, die auch entfallen könnten. Das Auswahlventil 74 umfasst eine Durchlassposition und eine Position, in der ein sich in Richtung auf den Ausgang 68 öffnendes Rückschlagventil 84 wirksam ist. Das Auswahlventil 74 kann vorzugsweise fremdkraftbetätigt durch den Bediener von seinem Arbeitsplatz auf dem Zugfahrzeug 22 betätigt werden. Es befindet sich in der Regel an Bord der Erntemaschine 10, während das Auswahlsteuerventil 54 an Bord des Zugfahrzeugs 22 in der Regel bereits serienmäßig vorgesehen ist.

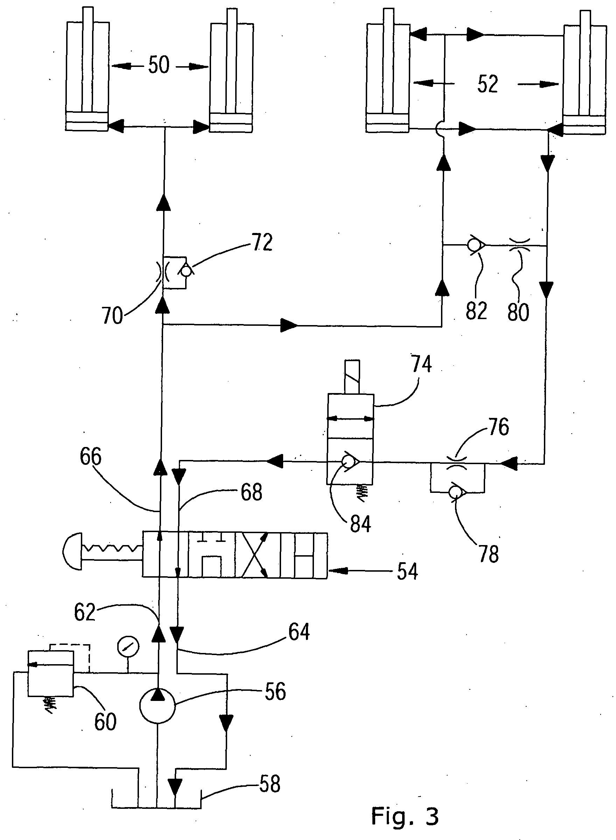

In der Figur 3 ist das Hydraulikschema der Figur 2 in einer Stellung gezeigt, in der sich das Auswahlsteuerventil 54 in einer ersten Durchlassstellung befindet, in der die Aufnehmertrommel 20 angehoben wird, während sich das Auswahlventil 74 in der Sperrstellung befindet. Demnach werden die Kolbenstangenkammern der Aktoren 52 beaufschlagt, so dass sich ein ggf. angehobener Niederhalter 40 absenkt und das aus den Kolbenkammern der Aktoren 50 hinaus gedrückte Hydraulikfluid durch die Drossel 76 und das Rückschlagventil 84 zum Vorratsbehälter 58 bewegt. Weiterhin werden die Kolbenkammern der Aktoren 50 durch die Drossel 70 hindurch mit Hydraulikfluid beaufschlagt, so dass sie das Gestell 48 mit der Aufnehmertrommel 20 nach oben bewegen. Durch die mittels der Drossel 70 gebremste Bewegung des Aktors 50 wird bewirkt, dass der Niederhalter 40 bereits abgesenkt ist, bevor die Aufnehmertrommel 20 ihre Außerbetriebsstellung erreicht, was eine Kollision des Niederhalters 40 mit der Deichsel 18 oder dem Fahrgestell 12 verhindert. Die in Figur 2 eingezeichneten Stellungen der Ventile 54, 74 werden insbesondere dann verwendet, wenn die Erntemaschine 10 ein Feldende erreicht hat und die Aufnehmertrommel 20 anzuheben ist, bevor ein Wendevorgang eingeleitet wird, oder vor einer Straßenfahrt. Die Stellung der Ventile 54, 74 bewirkt, dass ein ggf. angehobener Niederhalter 40 abgesenkt wird, bevor der Aufnehmer 50 angehoben wird. Normalerweise ist der Niederhalter 40 im Erntebetrieb aber abgesenkt, so dass sofort die Aufnehmertrommel 20 angehoben wird.

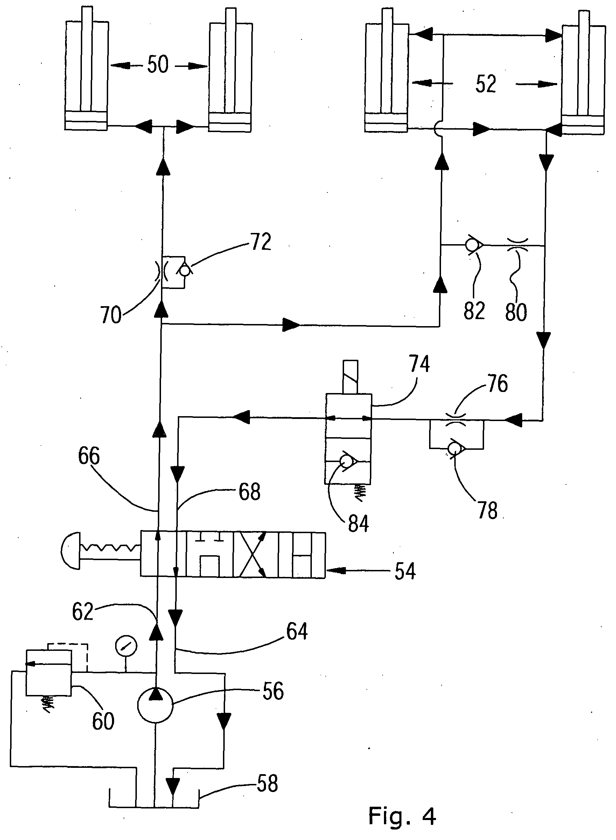

In der Figur 4 ist das Hydraulikschema der Figur 2 in einer Stellung gezeigt, in der sich das Auswahlsteuerventil 54 ebenfalls in der ersten Durchlassstellung befindet, in der die Aufnehmertrommel 20 angehoben wird, während sich das Auswahlventil 74 nunmehr in der Durchlassstellung befindet. Demnach werden die Kolbenkammern der Aktoren 50 durch die Drossel 70 hindurch mit Hydraulikfluid beaufschlagt, so dass sie das Gestell 48 mit der Aufnehmertrommel 20 nach oben bewegen. Die Kolbenstangenkammern der Aktoren 52 werden ebenfalls beaufschlagt, so dass sich der Niederhalter 40 absenkt und das aus den Kolbenkammern der Aktoren 50 hinaus gedrückte Hydraulikfluid durch die Drossel 76 und das Auswahlventil 84 zum Vorratsbehälter 58 bewegt, und zwar mit einer ähnlichen Geschwindigkeit wie in der Stellung nach Figur 3. Durch die mittels der Drossel 70 gebremste Bewegung des Aktors 50 wird auch hier bewirkt, dass der Niederhalter 40 bereits abgesenkt ist, bevor die Aufnehmertrommel 20 ihre Außerbetriebsstellung erreicht, was eine Kollision des Niederhalters 40 mit der Deichsel 18 oder dem Fahrgestell 12 verhindert. Die Stellung der Ventile 54 und 74 gemäß Figur 4 dient zum Absenken des Niederhalters 40, nachdem er zur Beseitigung einer Verstopfung angehoben wurde, wenn anschließend die Aufnehmertrommel 20 angehoben werden soll.

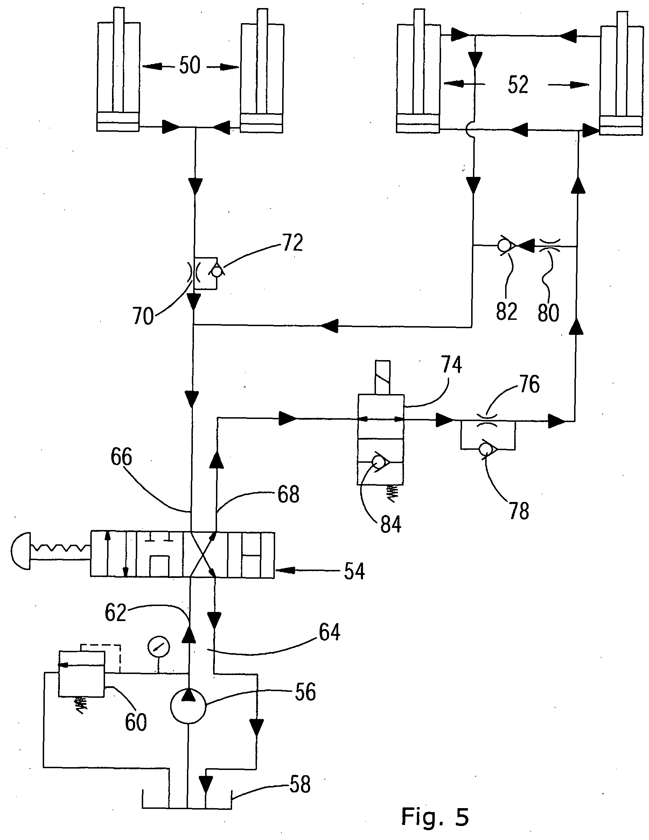

In der Figur 5 ist das Hydraulikschema der Figur 2 in einer Stellung gezeigt, in der sich das Auswahlsteuerventil 54 in einer zweiten Durchlassstellung befindet, in der die Aufnehmertrommel 20 abgesenkt wird, während sich das Auswahlventil 74 in der Durchlassstellung befindet. Demnach sind die Kolbenkammern der Aktoren 50 durch die Drossel 70 und das sich öffnende Rückschlagventil 72 mit dem Vorratsbehälter 58 verbunden, so dass sich das Gestell 48 mit der Aufnehmertrommel 20 aufgrund des Eigengewichts nach unten bewegt und das Hydraulikfluid aus der Kolbenkammer der ersten Aktoren 50 in den Vorratsbehälter 58 verdrängt. Die Kolbenstangenkammern der Aktoren 52 werden nunmehr über das Auswahlventil 74 und die Drossel 76 mit Druck beaufschlagt, so dass sich der Niederhalter 40 anhebt und das aus den Kolbenstangenkammern der Aktoren 52 hinaus gedrückte Hydraulikfluid zum Vorratsbehälter 58 bewegt. Befindet sich der Niederhalter 40 in seiner höchsten Position, wird der Druck in der Kolbenkammer der Aktors 50 durch die Drossel 80 und das Rückschlagventil 82 begrenzt. Die in Figur 5 dargestellten Positionen des Auswahlventils 74 und des Auswahlsteuerventils 54 eignen sich zum Anheben des Niederhalters 40 vor einem Reversiervorgang oder um verstopftes Erntegut langsam in die Erntemaschine 10 einzuziehen, was durch den angehobenen Niederhalter 40 erleichtert wird.

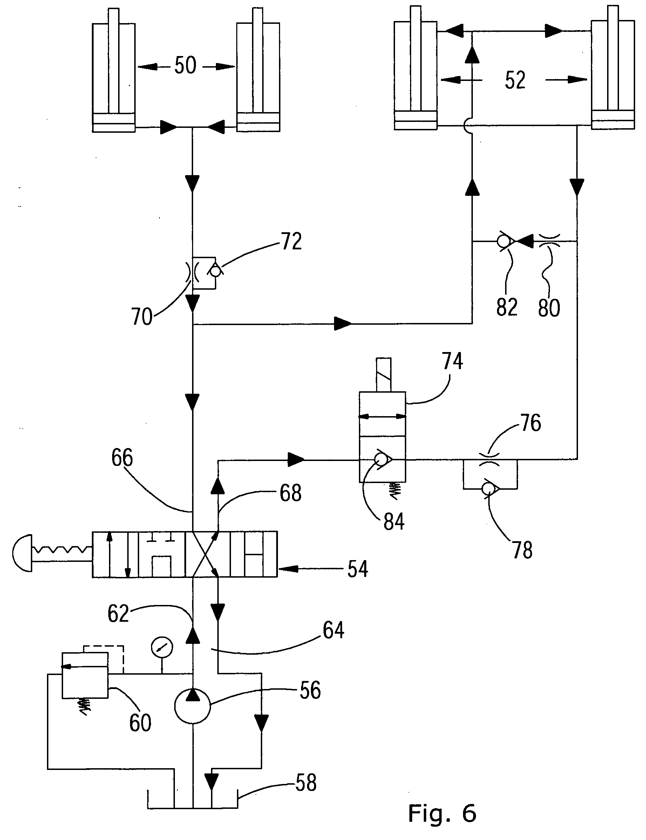

In der Figur 6 ist das Hydraulikschema der Figur 2 in einer Stellung gezeigt, in der sich das Auswahlsteuerventil 54 in der zweiten Durchlassstellung befindet, in der die Aufnehmertrommel 20 abgesenkt wird, während sich das Auswahlventil 74 in der Sperrstellung befindet. Demnach sind die Kolbenkammern der Aktoren 50 durch die Drossel 70 und das sich öffnende Rückschlagventil 72 mit dem Vorratsbehälter 58 verbunden, so dass sich das Gestell 48 mit der Aufnehmertrommel 20 aufgrund des Eigengewichts nach unten bewegt und das Hydraulikfluid aus der Kolbenkammer der ersten Aktoren 50 in den Vorratsbehälter 58 verdrängt. Durch sein Eigengewicht senkt sich der Niederhalter 40 ab, so dass Hydraulikfluid aus der Kolbenkammer des zweiten Aktors 52 über die Drossel 80 und das Rückschlagventil 82 in die Kolbenstangenkammer des zweiten Aktors 52 gelangt. Die in Figur 6 dargestellten Positionen des Auswahlventils 74 und des Auswahlsteuerventils 54 eignen sich zum Absenken des Niederhalters 40 nach einem Reversiervorgang oder einem langsamen Einziehen verstopften Ernteguts bei angehobenem Niederhalter 40.

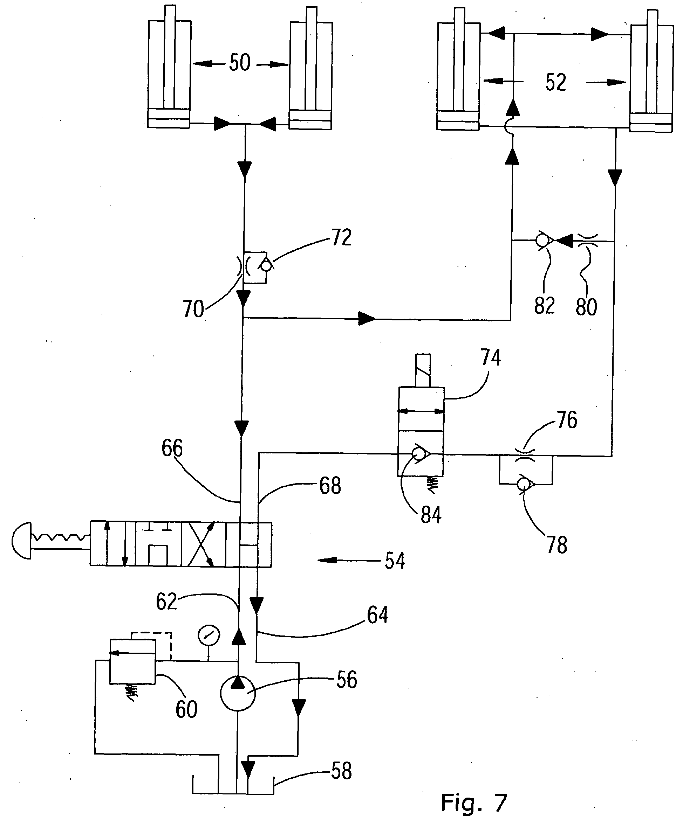

In der Figur 7 ist das Hydraulikschema der Figur 2 in einer Stellung gezeigt, in der sich das Auswahlsteuerventil 54 in einer Durchlassstellung befindet, in welcher alle Eingänge 62, 64 und alle Ausgänge 66, 68 untereinander verbunden sind, so dass die Aufnehmertrommel 20 abgesenkt wird, während sich das Auswahlventil 74 in der Sperrstellung befindet. Demnach sind die Kolbenkammern der Aktoren 50 durch die Drossel 70 und das sich öffnende Rückschlagventil 72 mit dem Vorratsbehälter 58 verbunden, so dass sich das Gestell 48 mit der Aufnehmertrommel 20 aufgrund des Eigengewichts nach unten bewegt und das Hydraulikfluid aus der Kolbenkammer der ersten Aktoren 50 in den Vorratsbehälter 58 verdrängt. Durch sein Eigengewicht senkt sich der Niederhalter 40 ab, so dass Hydraulikfluid aus der Kolbenkammer des zweiten Aktors 52 über die Drossel 80 und das Rückschlagventil 82 in die Kolbenstangenkammer des zweiten Aktors 52 gelangt. Die in Figur 7 dargestellten Positionen des Auswahlventils 74 und des Auswahlsteuerventils 54 stellen eine abgesenkte Stellung für die ersten Aktoren 50 und die Aufnehmertrommel 20 und für die zweiten Aktoren 52 und den Niederhalter 40 bereit, die sich für den normalen Erntebetrieb eignet.

## Patentansprüche

1. Anordnung zur Verstellung der Position einer Aufnehmertrommel (20) und eines Niederhalters (40) einer landwirtschaftlichen Erntemaschine (10), wobei die Aufnehmertrommel (20) mit mehreren umlaufenden Reihen von federnden Zinken (32) versehen ist, die angeordnet sind, über den Boden zu streifen und dabei auf ihm liegendes Erntegut anzuheben und nach hinten zu fördern und der Niederhalter (40) zur Begrenzung des von der Aufnehmertrommel (20) aufgenommenen Erntegutflusses nach vorn und oben dient, mit einem zum Bewegen der Aufnehmertrommel (20) gegenüber der Erntemaschine (10) zwischen einer abgesenkten Betriebsposition und einer angehobenen Außerbetriebsposition eingerichteten ersten Aktor (50), einem zur Höhenverstellung des Niederhalters (40) gegenüber der Aufnehmertrommel (20) eingerichteten zweiten Aktor (52) und einer mit den Aktoren (50, 52) verbundenen Steuereinrichtung, **dadurch gekennzeichnet, dass** die Steuereinrichtung ausgelegt ist, den zweiten Aktor (52) im Sinne einer Abwärtsbewegung des Niederhalters (40) anzusteuern, wenn sie den ersten Aktor (50) ansteuert, die Aufnehmertrommel (20) in die Außerbetriebsposition zu verbringen.

2. Anordnung nach Anspruch 1, **dadurch gekennzeichnet, dass** die Steuereinrichtung ausgelegt ist, den zweiten Aktor (52) zeitlich vor oder gleichzeitig mit dem der Ansteuerung des ersten Aktors (50) zur Bewegung der Aufnehmertrommel (20) in die Außerbetriebsposition im Sinne einer Abwärtsbewegung des Niederhalters (40) anzusteuern.

3. Anordnung nach Anspruch 1 oder 2, **dadurch gekennzeichnet, dass** die Aktoren (50, 52) Hydraulikzylinder sind und dass die Steuereinrichtung ein Auswahlsteuerventil (54) mit zwei Eingängen (62, 64) und zwei Ausgängen (66, 68) umfasst, dessen erster Eingang (62) mit einer Leitung mit unter Druck stehendem Hydraulikfluid, dessen zweiter Eingang (64) mit einem Vorratsbehälter (58), dessen erster Ausgang über eine Drossel (70) und ein dazu parallel geschaltetes Rückschlagventil (72) mit einer zum Anheben der Aufnehmertrommel (20) zu beaufschlagenden Kammer des ersten Aktors (50) und mit einer zum Absenken des Niederhalters (40) zu beaufschlagenden Kammer des zweiten Aktors (52) und dessen zweiter Ausgang (68) über ein Auswahlventil (74) und eine damit in Reihe geschaltete Drossel (76) mit einem parallel zur Drossel (76) geschalteten Rückschlagventil (78) mit einer zum Anheben des Niederhalters (40) zu beaufschlagenden Kammer des zweiten Aktors (52) verbunden ist.

4. Erntemaschine (10) mit einer Anordnung nach einem der Ansprüche 1 bis 3.

5. Erntemaschine (10) nach Anspruch 4, **dadurch gekennzeichnet, dass** die Aufnehmertrommel (20) gegenüber einem Fahrgestell (12) der Erntemaschine (10) um eine horizontal und quer zur Vorwärtsrichtung verlaufende Achse (36) schwenkbar angebracht und bodenkopierend geführt ist und dass der Niederhalter (40) gegenüber der Aufnehmertrommel (20) höhenverschiebbar oder um eine horizontal und quer zur Vorwärtsrichtung verlaufende Achse (44) schwenkbar angebracht ist.

6. Erntemaschine (10) nach Anspruch 4 oder 5, **dadurch gekennzeichnet, dass** sie eine gezogene Ballenpresse ist, und dass eine Deichsel (18) oberhalb des Niederhalters (40) angebracht ist.

## Claims

1. Arrangement for adjusting the position of a pick-up drum (20) and of a pressing element (40) in an agricultural harvesting machine (10), wherein the pick-up drum (20) is provided with a plurality of rotating rows of resilient tines (32) which are arranged to skim over the ground and, in the process, to pick up crop lying thereon and to convey said crop rearwards, and the pressing element (40) serves for limiting the crop flow picked up by the pick-up drum (20) forwards and upwards, with a first actuator (50) which is designed for moving the pick-up drum (20) in relation to the harvesting machine (10) between a lowered operating position and a raised inoperative position, a second actuator (52) which is designed for adjusting the height of the pressing element (40) in relation to the pick-up drum (20), and with a control device which is connected to the actuators (50, 52), **characterized in that** the control device is designed to activate the second actuator (52) in the sense of a downwards movement of the pressing element (40) if said control device activates the first actuator (50) to bring the pick-up drum (20) into the inoperative position.

2. Arrangement according to Claim 1, **characterized in that** the control device is configured to activate the second actuator (52) in the sense of a downwards movement of the pressing element (40) temporally before or at the same time with the activation of the first actuator (50) in order to move the pick-up drum (20) into the inoperative position.

3. Arrangement according to Claim 1 or 2, **characterized in that** the actuators (50, 52) are hydraulic cylinders, and **in that** the control device comprises a selection control valve (54) with two inputs (62, 64) and two outputs (66, 68), the first input (62) of which is connected to a line with pressurized hydraulic fluid, the second input (64) of which is connected to a storage container (58), the first output of which is connected via a constrictor (70) and a nonreturn valve (72), which is connected parallel thereto, to a chamber of the first actuator (50), which chamber is to be acted upon for raising the pick-up drum (20), and to a chamber of the second actuator (52), which chamber is to be acted upon for lowering the pressing element (40), and the second output (68) of which is connected via a selection valve (74) and a constrictor (76), which is connected in series to the latter, with a nonreturn valve (78), which is connected parallel to the constrictor (76), to a chamber of the second actuator (52), which chamber is to be acted upon for raising the pressing element (40).

4. Harvesting machine (10) having an arrangement according to one of Claims 1 to 3.

5. Harvesting machine (10) according to Claim 4, **characterized in that** the pick-up drum (20) is mounted pivotably in relation to a chassis (12) of the harvesting machine (10) about an axis (36) running horizontally and transversely with respect to the forwards direction, and is guided in a ground-copying manner, and **in that** the pressing element (40) is mounted height-displaceably or pivotably about an axis (44) running horizontally and transversely with respect to the forwards direction in relation to the pick-up drum (20).

6. Harvesting machine (10) according to Claim 4 or 5, **characterized in that** said harvesting machine is a towed baler, and **in that** a tow bar (18) is mounted above the pressing element (40).

## Revendications

1. Agencement de réglage de la position d'un tambour ramasseur (20) et d'un élément presseur (40) d'une moissonneuse agricole (10), le tambour ramasseur (20) étant muni de plusieurs rangées périphériques de dents à ressort (32) qui sont disposées de manière à racler le sol et à ainsi soulever la récolte reposant sur le sol et à la transporter vers l'arrière, et l'élément presseur (40) servant à limiter le flux vers l'avant et vers le haut de la récolte ramassée par le tambour ramasseur (20), avec un premier actionneur (50) prévu pour déplacer le tambour ramasseur (20) par rapport à la moissonneuse (10) entre une position de fonctionnement abaissée et une position hors fonctionnement relevée, avec un deuxième actionneur (52) prévu pour le réglage en hauteur de l'élément presseur (40) par rapport au tambour ramasseur (20) et un dispositif de commande connecté aux actionneurs (50, 52), **caractérisé en ce que** le dispositif de commande est conçu de manière à commander le deuxième actionneur (52) dans le sens d'un déplacement vers le bas de l'élément presseur (40) lorsqu'il commande le premier actionneur (50) de manière à ce qu'il amène le tambour ramasseur (20) dans la position hors fonctionnement.

2. Agencement selon la revendication 1, **caractérisé en ce que** le dispositif de commande est conçu de manière à commander le deuxième actionneur (52) temporellement avant ou simultanément à la commande du premier actionneur (50) de manière à ce qu'il déplace le tambour ramasseur (20) dans la position hors fonctionnement dans le sens d'un déplacement vers le bas de l'élément presseur (40).

3. Agencement selon la revendication 1 ou 2, **caractérisé en ce que** les actionneurs (50, 52) sont des cylindres hydrauliques et **en ce que** le dispositif de commande comprend une soupape de commande de sélection (54) avec deux entrées (62, 64) et deux sorties (66, 68), dont la première entrée (62) est connectée à une conduite de fluide hydraulique sous pression, dont la deuxième entrée (64) est connectée à un réservoir (58), dont la première sortie est connectée par le biais d'un étranglement (70) et d'un clapet antiretour (72) monté en parallèle avec celui-ci, à une chambre du premier actionneur (50) devant être sollicitée pour relever le tambour ramasseur (20) et à une chambre du deuxième actionneur (52) devant être sollicitée pour abaisser l'élément presseur (40) et dont la deuxième sortie (68) est connectée par le biais d'une soupape de sélection (74) et d'un étranglement (76) monté en série avec celle-ci avec un clapet antiretour (78) monté en parallèle avec l'étranglement (76) à une chambre du deuxième actionneur (52) devant être sollicitée pour relever l'élément presseur (40).

4. Moissonneuse (10) comprenant un agencement selon l'une quelconque des revendications 1 à 3.

5. Moissonneuse (10) selon la revendication 4, **caractérisée en ce que** le tambour ramasseur (20) est monté de manière à pouvoir pivoter autour d'un axe (36) s'étendant horizontalement et transversalement à la direction d'avance par rapport à un châssis (12) de la moissonneuse (10) et est guidé de manière à suivre le contour du sol et **en ce que** l'élément presseur (40) est monté de manière déplaçable en hauteur par rapport au tambour ramasseur (20) ou de manière à pouvoir pivoter autour d'un axe (44) s'étendant horizontalement et transversalement à la direction d'avance.

6. Moissonneuse (10) selon la revendication 4 ou 5, **caractérisée en ce qu'**il s'agit d'une presse à balles tractée, et **en ce qu'**un timon (18) est monté au-dessus de l'élément presseur (40).
